# EUROPEAN PATENT SPECIFICATION

(11) **EP 1 363 048 B1**
(45) Date of publication and mention of the grant of the patent: **26.07.2006**
(21) Application number: 02445058.7
(22) Date of filing: 15.05.2002
(51) Int. Cl.: F16H 59/10, F16H 59/12

(54) **A control device in a motor vehicle**
Steuerungsvorrichtung für ein Kraftfahrzeug
Dispositif de commande pour véhicule automobile

(43) Date of publication of application: 19.11.2003
(73) Proprietor: Ford Global Technologies, LLC., Dearborn MI 48126 (US)
(72) Inventor: Engström, Stefan, 416 55 Göteborg (SE); Johannesson, Frank, 434 96 Kungsbacka (SE)
(74) Representative: Hellbom, Lars Olof

(56) References cited:
- EP-A- 1 022 493
- EP-A- 1 146 257
- DE-A- 19 850 374
- US-B1- 6 260 432

## Description

### TECHNICAL FIELD

The present invention relates to a control device for selecting operational states of a transmission of a motor vehicle, according to the non-characterising portion of claim 1.

### BACKGROUND

In a vehicle transmission control system it is desirable to present a control device to be maneuvered by a vehicle driver, that the driver feels comfortable with and which is easy to handle. Traditional control devices for automatic transmission are adapted to be maneuvered to a number of positions, each corresponding to a specific operational state of the transmission, e.g. parking, reverse, neutral and drive.

US6260432B 1 presents a selecting device comprising a lever which can be tilted from a neutral upright position in four different directions, each corresponding to an operational state of an automatic transmission, i.e. parking, reverse, neutral and drive state, respectively.

A disadvantage with known art transmission control devices is that the large amount of possible positions of the selecting device results in a large complexity of the transmission control operations.

EP1146257A2, presenting the non-characterising features of claim 1, discloses two transmission control buttons on a steering wheel, whereby the transmission changes from a neutral state to a forward drive state when one of the buttons is pressed, and the transmission changes from the forward drive state to the neutral state by pressing one of the buttons.

### SUMMARY

It is an object of the present invention to improve the driver's environment when operating a motor vehicle.

Another object of the invention is to reduce complexity involved in the control of a vehicle transmission.

These objects are reached by a control device of the type mentioned initially, presenting the features of the characterising portion of claim 1.

Preferably, the control device is adapted so that, if the transmission is in the neutral state and if the maneuvering device is moved to the second position, the control device sends at least one signal so as for the transmission to change to the reverse state, and, if the transmission is in the reverse state and if the maneuvering device is moved to the first position, the control device sends at least one signal so as for the transmission to change to the neutral state.

Thus, the invention provides a control device that can be used to select at least three different operational states of the transmission by moving the control device to only two positions. This, in turn reduces for a driver the complexity of the transmission control operation. Thereby, the driver can use more concentration on other driving aspects.

### BRIEF DESCRIPTION OF THE DRAWINGS

Below, the invention will described in greater detail, with reference to the drawings, in which
- fig. 1 shows schematically a transmission system in a motor vehicle,
- fig. 2 shows a control device according to a preferred embodiment of the invention,
- fig. 3-5 show flow diagrams mapping control device maneuvers to transmission operational states, and
- fig. 6-7 show alternative control devices.

### DETAILED DESCRIPTION

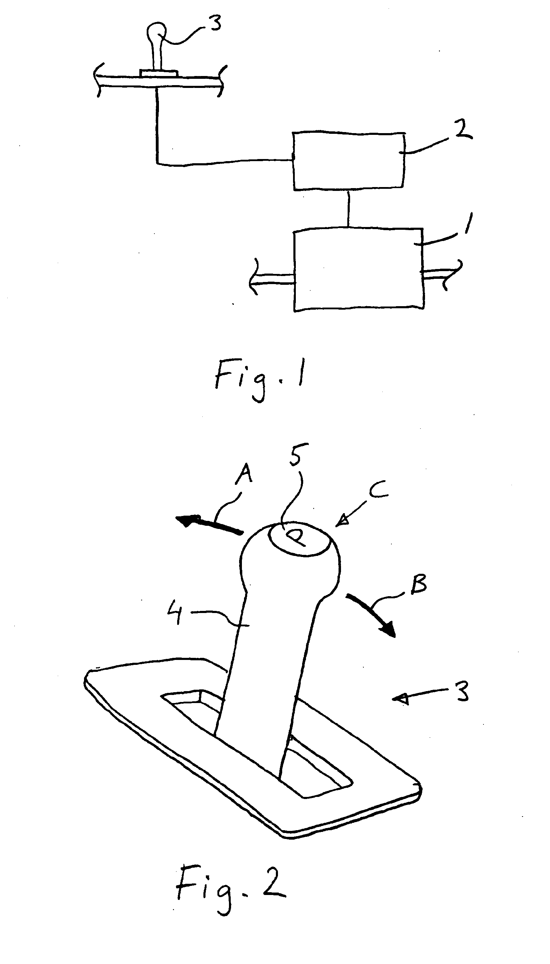

Fig. 1 shows schematically a transmission system in a motor vehicle. An automatic transmission 1 in the vehicle drivetrain, is connected to a transmission control module (TCM) 2, which in turn is connected to a control device 3, adapted to be operated by a vehicle driver, here also referred to as operator.

The control device 3 comprises electric circuits (not shown), and is adapted to send control signals reflective of the actuation status of the control device 3, so as to control the operational states of the transmission 1 via the TCM 2. The transmission 1 is adapted to assume a first, a second, a third and a fourth operational state, corresponding to a neutral N, a drive D, a reverse R and a parking state P, respectively, as in many traditional automatic transmissions. Of course the transmission 1 can be adapted to assume additional states, such as a lower gear state.

As can be seen in fig. 2, the control device 3 comprises a maneuvering device 4 in the form of a lever 4. It can be located on a console between the driver seat and the passenger seat, or on the steering column, similar to a traditional steering column gear lever.

By being handled by the driver, the lever 4 can be tilted forward with reference to the vehicle, in the direction of the arrow A, so that it reaches a first position, here also referred to as A. The lever 4 can also be tilted rearward with reference to the vehicle, in the direction of the arrow B, so that it reaches a second position, here also referred to as B. When the lever 4 is released by the driver from any of these positions it will automatically, biased by spring action, move to a third position C, between the first and the second positions, A and B, respectively. It will stay in the third position when not subjected to any operating maneuver by the driver.

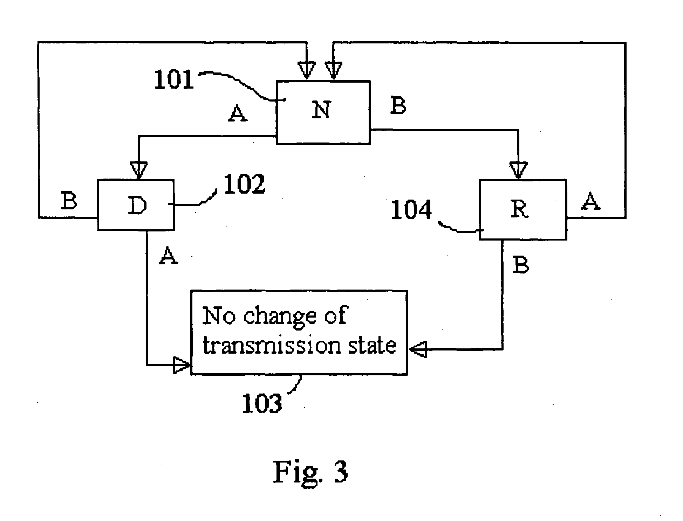

Now referring to fig. 3, the control device 3 is adapted so that, if the transmission 1 is in the first operational state, i.e. the neutral state N (block 101), and if the lever 4 is moved to the first position A, it sends at least one signal so as for the transmission 1 to change to the second operational state, i.e. the drive state D (block 102). As soon as the driver releases the lever 4 it automatically moves back to position C, shown in fig. 2.

If the transmission 1 is in the drive state D (block 102) and if the lever 4 is moved to the second position B, the control device 3 sends at least one signal so as for the transmission 1 to change to the neutral state N (block 101). If the transmission 1 is in the drive state D (block 102) and if the lever 4 is moved to the first position A, no signals are sent so as for the transmission 1 to change state (block 103).

If the transmission 1 is in the neutral state N (block 101), and the lever 4 is moved to the second position B, the control device 3 sends at least one signal so as for the transmission 1 to change to the third operational state, i.e. reverse state R (block 104). Again, when the lever 4 is released it springs back to position C.

If the transmission 1 is in the reverse state R (block 104) and if the lever 4 is moved to the first position A, it sends at least one signal so as for the transmission 1 to change to the neutral state N (block 101). If the transmission 1 is in the reverse state R (block 104) and if the lever 4 is moved to the second position B, no signals are sent so as for the transmission 1 to change state (block 103).

Tests performed by the inventors have shown that the mapping of lever movements to transmission state changes according to what has been described with reference to fig. 3 provides for a simple control of the transmission 1, and agrees with the instincts of the driver, which in turn makes the driver feel at rest with the transmission control. The correspondence with driver instincts are further enhanced by the consistency of correlation between the movements of the lever and the transmission states. The consistency is provided by a forward movement of the vehicle always corresponding to a forward movement of the lever, regardless of the previous states of the transmission. Similarly, a rearward movement of the vehicle always corresponds to a rearward movement of the lever, regardless of the previous states of the transmission.

Of course, the control device 3 could be adapted differently. For example, the neutral to reverse state change of the transmission 1 could be reached by a forward movement of the lever 4, whereby the neutral to drive state change of the transmission 1 could be reached by a rearward movement of the lever 4.

As a further alternative, the lever 4 could be adapted to be tilted in other directions than the ones described, e.g. sideways.

In general, this embodiment of the present invention provides for the control device being adapted so that at least three states of the transmission can be controlled by moving the maneuvering device to two positions. Thereby, if the transmission is in the first operational state and if the maneuvering device is moved to the first or the second position, the transmission is changed to the second or third operational state. If the transmission is in the second or third operational state and if the maneuvering device is again moved to the first or the second position, the transmission is changed back to the first operational state.

As shown in fig. 2, the control device 3 comprises a command device 5 in the form of a push-button type parking state switch 5 on top of the lever 4. The parking state switch 5 is used to change the transmission 1 to the fourth operational state, i.e. the parking state P. The parking state switch 5 can also be used to bring the transmission 1 from the parking state P to one of the other operational states.

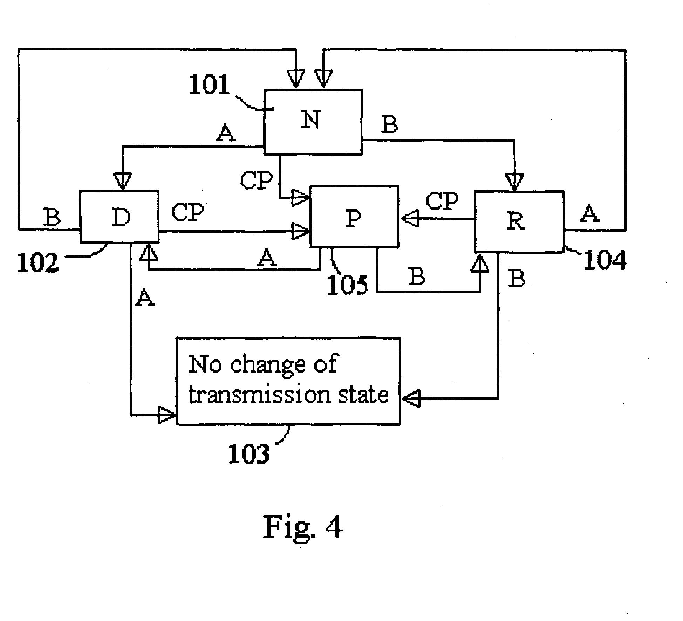

In fig. 4, maneuvering the parking state switch 5 is denoted CP. Preferably, the control device 3 is adapted so that maneuvering the parking state switch 5 will cause the transmission 1 to change to parking state (block 105) when in neutral state (block 101), drive state (block 102), or reverse state R (block 104). Also, preferably the control device 3 is adapted so that, when the transmission 1 is in parking state P (block 105), moving the lever 4 to the first position A will cause the transmission 1 to change to drive state (block 102). Similarly, when the transmission 1 is in parking state P (block 105), moving the lever 4 to the second position B will cause the transmission 1 to change to reverse state (block 104). The TCM 2 (fig. 1) could be adapted to receive signals corresponding to the activation of a brake control pedal in the vehicle, and the change from parking state to drive state or from parking state to reverse state could be performed on the condition that the brake control pedal is pressed down.

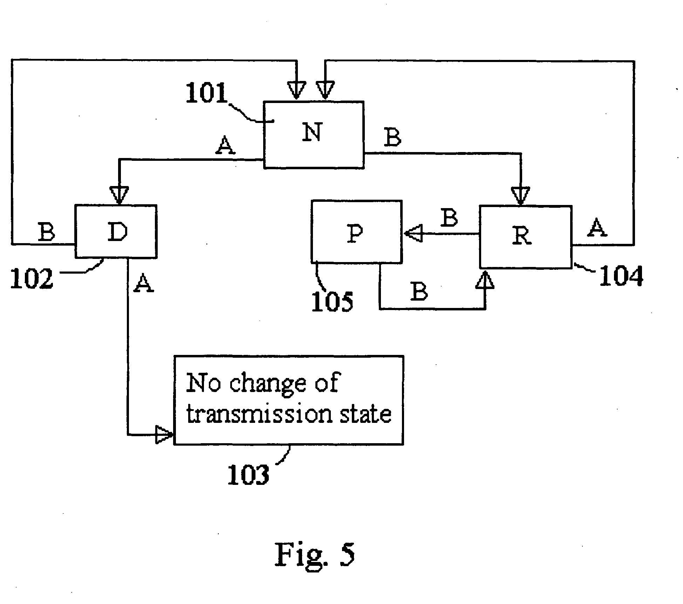

As a further alternative, depicted in fig. 5, the control device 3 can be adapted so that the parking state P can only be reached by tilting the lever 4 to the second position B (see fig. 2), when the transmission 1 is in the reverse state R (block 104). Thereby, the control device 3 could be adapted so that the transmission state is changed from parking P (block 105) to reverse R by again moving the lever 4 to the second position B. Thereby, the need for a separate command device 5 for the fourth operational state is eliminated.

Alternatively, the control device 3 can be adapted so that the parking state P can be reached by tilting the lever 4 to the right or left, or any other direction different from the directions A and B described above.

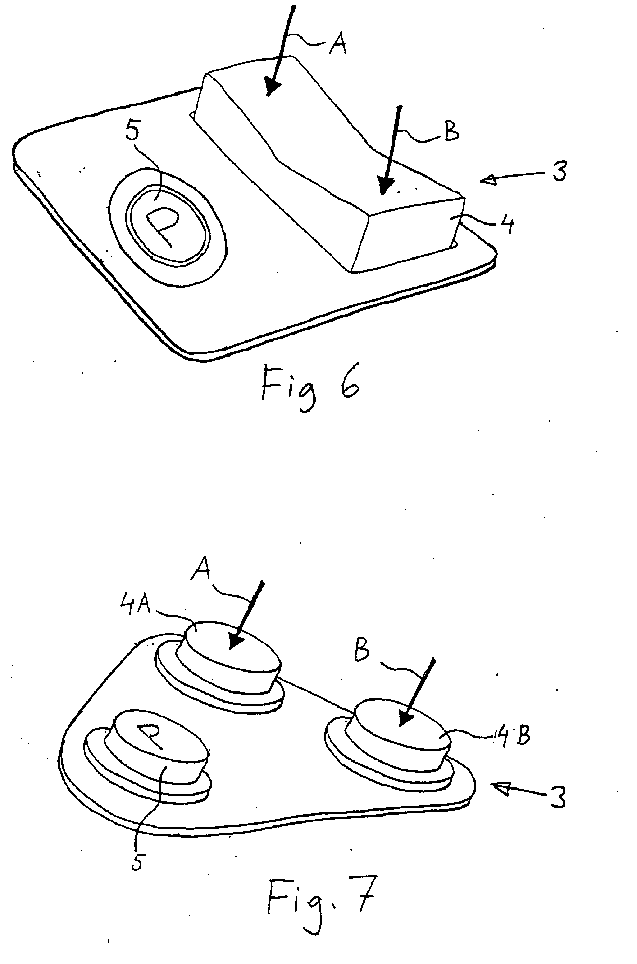

Fig. 6 shows an alternative control device 3 for selecting operational states of a transmission in a motor vehicle. The control device 3 comprises a maneuvering device 4 in the form of a toggle switch 4. The control device 3 can be located on a steering wheel of the vehicle and maneuverable with a thumb of a driver, who can retain a grip with remaining fingers on the steering wheel. Thereby, transmission control operation can be performed without any of the hands of the driver having to be separated from the steering wheel, which enhances driving safety. The control device 3 in fig. 6 can also be located on a console between the driver seat and the passenger seat.

The toggle switch 4 can be tilted by the driver in any of two directions, indicated by arrows A and B, whereby it assumes a first and a second position, respectively, here also denoted A and B, respectively. When not handled by the driver, the toggle switch 4 is adapted to assume a third position, "between" the first and the second position.

The control device 3 is also provided with a push-button type parking state switch 5, corresponding to the command device 5 described above with reference to fig. 2, 4 and 5. Thereby, the same operative steps as described above with reference to figures 3-5 can be obtained.

Fig. 7 shows a further alternative control device 3 for selecting operational states of a transmission in a motor vehicle, the device comprising a first 4A and a second 4B push-button type maneuvering switch, located relatively close to each other. Similar to the device shown in fig. 6, the device shown in fig. 7 can be located on the steering wheel or on a console between the driver seat and the passenger seat. The pair of maneuvering switches 4A, 4B can by maneuvering of a driver in directions indicated by arrows A and B, assume a first and a second position, respectively, here also denoted A and B, respectively. When not handled by the driver, the first 4A and the second maneuvering switch 4B are adapted to assume a third "un-pushed" position. Here also the control device 3 can be provided with a push-button type parking state switch 5, corresponding to the command device 5 described above with reference to fig. 2, 4 and 5. Thereby, the same operative steps as described above with reference to figures 3-5 can be obtained.

Above, the invention has been described in relation to an automatic transmission. However, the invention is also applicable on any other type of transmission, where some type of automatic gear control is involved, such as in a continuously variable transmission (CVT).

## Claims

1. A control device (3) for selecting operational states of a transmission (1) of a motor vehicle,
- the control device (3) being connected to the transmission (1), which is adapted to assume at least a neutral (101), a forward drive (102), and a reverse (104) state,
- the control device (3) comprising a maneuvering device (4), which is adapted to assume a first position (A) or a second position (B) when maneuvered by an operator, and to assume a third position (C) when not maneuvered by the operator,
- the control device (3) being adapted so that, if the transmission (1) is in the neutral state (101) and if the maneuvering device (4, 4A, 4B) is moved to the first position (A), the control device (3) sends at least one signal so as for the transmission (1) to change to the forward drive state (102), and, if the transmission (1) is in the forward drive state (102) and if the maneuvering device (4, 4A, 4B) is moved to the second position (B), the control device (3) sends at least one signal so as for the transmission (1) to change to the neutral state (101),
- **characterized in that**
- the maneuvering device is a lever (4) and is biased to automatically return from the first (A) or the second (B) position to the third position (C),
- whereby the first position (A) corresponds to the lever (4) being tilted essentially forward with reference to the vehicle, the second position (B) corresponds to the lever (4) being tilted essentially rearward with reference to the vehicle, and the third position (C) corresponds to the lever (4) being located essentially between the first (A) and the second (B) position.

2. A control device (3) according to claim 1, **characterized in that** it is adapted so that, if the transmission (1) is in the neutral state (101) and if the maneuvering device (4, 4A, 4B) is moved to the second position (B), the control device (3) sends at least one signal so as for the transmission (1) to change to the reverse state (104), and, if the transmission (1) is in the reverse state (104) and if the maneuvering device (4, 4A, 4B) is moved to the first position (A), the control device (3) sends at least one signal so as for the transmission (1) to change to the neutral state (101).

3. A control device (3) according to any of claims 1-2, whereby the maneuvering device is located between a driver's seat and a passenger seat of the vehicle.

4. A control device (3) according to any of the previous claims, comprising a command device (5), whereby the control device (3) is adapted to send at least one signal so as for the transmission (1) to change to a fourth operational state (105) upon activation of the command device (5), whereby said fourth operational state is a park state.

5. A control device (3) according to claim 4, wherein said command device is a pushbutton.

## Patentansprüche

1. Steuervorrichtung (3) zum Auswählen von Betriebszuständen eines Getriebes (1) eines Motorfahrzeugs,
- wobei die Steuervorrichtung (3) mit einem Getriebe (1) verbunden ist, das dazu ausgelegt ist, zumindest einen neutralen (101), einen Vorwärtsfahr- (102) und einen Rückwärts- (104) Zustand einzunehmen,
- wobei die Steuervorrichtung (3) eine Manövriervorrichtung (4), die dazu ausgelegt ist, eine erste Position (A) oder eine zweite Position (B) einzunehmen, wenn sie durch eine Bedienperson manövriert wird, und eine dritte Position (C) einzunehmen, wenn sie durch die Bedienperson nicht manövriert wird, aufweist,
- wobei die Steuervorrichtung (3) dazu ausgelegt ist, dass wenn das Getriebe (1) in dem neutralen Zustand (101) ist, und wenn die Manövriervorrichtung (4, 4A, 4B) in die erste Position (A) bewegt ist, die Steuervorrichtung (3) zumindest ein Signal derart sendet, um das Getriebe (1) in den Vorwärtsfahrzustand (102) zu verändern, und wenn das Getriebe (1) in dem Vorwärtsfahrzustand (102) ist, und wenn die Manövriervorrichtung (4, 4A, 4B) in die zweite Position (B) bewegt ist, sendet die Steuervorrichtung (3) mindestens ein Signal derart, dass sich das Getriebe (1) in den neutralen Zustand (101) verändert,
- **dadurch gekennzeichnet, dass**
- die Manövriervorrichtung ein Hebel (4) ist und vorgespannt ist, um automatisch von der ersten (A) oder der zweiten (B) Position in die dritte Position (C) zurückzukehren,
- wobei die erste Position (A) einer Neigung des Hebels (4) im wesentlichen vorwärts in Bezug auf das Fahrzeug entspricht, wobei die zweite Position (B) einer Neigung des Hebels (4) im wesentlichen rückwärts in Bezug auf das Fahrzeug entspricht, und wobei die dritte Position (C) einer Lage des Hebels (4) im wesentlichen zwischen der ersten (A) und der zweiten (B) Position entspricht.

2. Steuervorrichtung (3) nach Anspruch 1, **dadurch gekennzeichnet, dass** sie dazu ausgelegt ist, dass wenn das Getriebe (1) in dem neutralen Zustand (101) ist, und wenn die Manövriervorrichtung (4, 4A, 4B) in die zweite Position (B) bewegt ist, die Steuervorrichtung (3) zumindest ein Signal derart sendet, dass sich das Getriebe (1) in den Rückwärtszustand (104) verändert, und wenn das Getriebe (1) in dem Rückwärtszustand (104) ist, und wenn die Manövriervorrichtung (4, 4A, 4B) in die erste Position (A) bewegt ist, sendet die Steuervorrichtung (3) zumindest ein Signalwert, damit das Getriebe (1) sich in den neutralen Zustand (101) verändert.

3. Steuervorrichtung (3) nach einem der Ansprüche 1 bis 2, bei welcher die Manövriervorrichtung zwischen einem Fahrersitz und einem Passagiersitz des Fahrzeugs gelegen ist.

4. Steuervorrichtung (3) nach einem der vorhergehenden Ansprüche, umfassend eine Befehlsvorrichtung (5), wobei die Steuervorrichtung (3) dazu ausgelegt ist, mindestens ein Signal derart zu senden, dass sich das Getriebe (1) in einen vierten Betriebszustand (105) bei Aktivierung der Befehlvorrichtung (5) verändert, wobei der vierte Betriebszustand ein Parkzustand ist.

5. Steuervorrichtung (3) nach Anspruch 4, bei welcher die Befehlsvorrichtung ein Druckknopf ist.

## Revendications

1. Un dispositif de contrôle (3) pour la sélection des modes de fonctionnement d'une transmission (1) d'un véhicule moteur,
- le dispositif de contrôle (3) étant relié à la transmission (1), laquelle est adaptée pour assumer au moins un mode neutre (101), un mode de marche avant (102), et un mode de marche arrière (104).
- le dispositif de contrôle (3) comportant un dispositif de manoeuvre (4), qui est adapté pour assumer une première position (A) ou une deuxième position (B) lorsqu'il est manoeuvré par un opérateur, et pour assumer une troisième position (C) lorsqu'il n'est pas manoeuvré par l'opérateur,
- le dispositif de contrôle (3) étant adapté afin que, si la transmission (1) est au mode neutre (101) et si le dispositif de manoeuvre (4, 4A, 4B) est déplacé vers la première position (A), le dispositif de contrôle (3) envoie au moins un signal pour que la transmission (1) change vers le mode de marche avant (102), et, si la transmission (1) est dans le mode de marche avant (102) et si le dispositif de manoeuvre (4, 4A, 4B) est déplacé vers la deuxième position (B), le dispositif de contrôle (3) envoie au moins un signal pour que la transmission (1) change vers le mode neutre (101),
- **caractérisé en ce que**
- le dispositif de manoeuvre est un levier (4) et il est biaisé pour retourner automatiquement de la première (A) ou la deuxième (B) position vers la troisième position (C),
- où la première position (A) correspond au levier (4) étant incliné essentiellement vers l'avant par rapport au véhicule, la deuxième position (B) correspond au levier (4) étant incliné essentiellement vers l'arrière par rapport au véhicule, et la troisième position (C) correspond au levier (4) étant situé essentiellement entre la première (A) et la deuxième (B) position.

2. Un dispositif de contrôle (3) selon la revendication 1, **caractérisé en ce qu'**il est adapté afin que, si la transmission (1) est dans le mode neutre (101) et si le dispositif de manoeuvre (4, 4A, 4B) est déplacé vers la deuxième position (B), le dispositif de contrôle (3) envoie au moins un signal pour que la transmission (1) change vers le mode de marche arrière (104), et, si la transmission (1) est dans le mode de marche arrière (104) et si le dispositif de manoeuvre (4, 4A, 4B) est déplacé vers la première position (A), le dispositif de contrôle (3) envoie au moins un signal afin que la transmission (1) change vers le mode neutre (101).

3. Un dispositif de contrôle (3) selon l'une quelconque des revendications 1-2, dans lequel le dispositif de manoeuvre est situé entre le siège du chauffeur et un siège de passager du véhicule.

4. Un dispositif de contrôle (3) selon l'une quelconque des revendications précédentes, comportant un dispositif de commande (5), dans lequel le dispositif de contrôle (3) est adapté pour envoyer au moins un signal afin que la transmission (1) change vers un quatrième mode de fonctionnement (105) lors de l'actionnement du dispositif de commande (5), où ledit quatrième mode de fonctionnement est un mode de stationnement.

5. Un dispositif de contrôle (3) selon la revendication 4, dans lequel ledit dispositif de commande est un bouton-poussoir.
